# EUROPÄISCHE PATENTANMELDUNG

(11) **EP 3 772 507 A1**
(43) Veröffentlichungstag der Anmeldung: **10.02.2021**
(21) Anmeldenummer: 20181365.6
(22) Anmeldetag: 22.06.2020
(51) Int. Cl.: C05B 11/04

(54) **VORRICHTUNG ZUR HERSTELLUNG VON DÜNGEMITTELGRANULAT**

(30) Priorität: 08.08.2019 DE 102019211957
(71) Anmelder: Glatt Ingenieurtechnik GmbH, 99427 Weimar (DE)
(72) Erfinder: Jacob, Michael, 99425 Weimar (DE)
(74) Vertreter: Patentanwälte Magenbauer & Kollegen Partnerschaft mbB

(57) **Zusammenfassung**

Die Erfindung betrifft eine Vorrichtung (1) zur Herstellung von Düngemittelgranulat umfassend eine über einen Rohstoffzulauf (2), einen Säurezulauf (3) und einen Reaktorablauf (4) verfügende, einen Reaktor (5) aufweisende Reaktoreinheit (6) zur Erzeugung einer Suspension aus dem phosphathaltigen Rohstoff und einer Säure sowie einen Granulator (7) zur Granulation der erzeugten Suspension, wobei die Reaktoreinheit (6) über eine Reaktorrezirkulationseinrichtung (11) für die Suspension verfügt.

## Beschreibung

Die Erfindung betrifft eine Vorrichtung zur Herstellung von Düngemittelgranulat umfassend eine über einen Rohstoffzulauf, einen Säurezulauf und einen Reaktorablauf verfügende, einen Reaktor aufweisende Reaktoreinheit zur Erzeugung einer Suspension aus dem phosphathaltigen Rohstoff und einer Säure sowie einen Granulator zur Granulation der erzeugten Suspension.

Verfahren und Vorrichtungen zur Herstellung von Düngemittelgranulaten gehören seit vielen Jahren zum Stand der Technik. Aufgrund gesetzlicher Vorgaben und der Abnahme der weltweiten Phosphorvorräte wird eine Phosphorrückgewinnung aus phosphathaltigen Rohstoffen, wie bspw. Aschen aus der Mono- oder Mitverbrennung von Klärschlamm, Tierausscheidungen, Tiermehl, Tierresten und Tierkörpern, Aschen aus der Verbrennung von Gülle und Gärresten als Einzelstoff bzw. Gemische daraus, immer wichtiger für die Industrie.

In der Offenlegungsschrift DE 10 2009 020 745 A1 ist ein Verfahren zur Gewinnung von Wertstoffen aus Klärschlammprodukten durch Extraktion offenbart, wobei eine Suspension des Klärschlammproduktes in Wasser, Alkohol, einem Wasser/AlkoholGemisch oder einer wässrigen Lösung hergestellt und gasförmiges oderüberkritisches Kohlendioxid als Extraktionsmittel in diese Suspension des Klärschlammproduktes eingeleitet wird, ungelöste Feststoffe von dem flüssigen Suspendiermittel abgetrennt, Kohlendioxid aus dem Suspendiermittel entfernt und in dem Suspendiermittel gelöste Wertstoffe ausgefällt und von dem Suspendiermittel abgetrennt werden. Nachteilig an diesem Verfahren ist der sehr hohe Aufwand zu dessen Durchführung wodurch das Verfahren sehr kostenintensiv ist.

Die DE 10 2016 116 633 A1 offenbart ein Verfahren zur Herstellung von Düngemittelgranulaten, wobei der phosphathaltige Sekundärrohstoff mit einer Mineralsäure zu einer Suspension versetzt wird und die Suspension anschließend einer Granulation zugeführt wird sowie die mit dem Verfahren hergestellten Düngemittelgranulate. Nachteilig hieran ist, dass die zu Düngemittelgranulaten verarbeitete Suspension Rohstoffpartikel aufweist, die reaktionsträge sind und an Engstellen in einer Vorrichtung wie Düsen zur Verstopfung dieser neigen.

Aufgabe der Erfindung ist es daher die aus dem Stand der Technik bekannten Nachteile zu überwinden und eine Vorrichtung bereitzustellen, mit dem Düngemittelgranulate herstellt werden können, wobei die in der Suspension gelösten Rohstoffpartikel einen höheren Grad an aufgeschlossenem Phosphat aufweisen, um die Produktqualität der Düngemittelgranulate zu erhöhen.

Die Aufgabe wird durch eine Vorrichtung eingangs genannter Art, dadurch gelöst, dass die Reaktoreinheit über eine Reaktorrezirkulationseinrichtung für die Suspension verfügt. Durch die Rezirkulation bzw. die Änderung des Anteils des rezirkulierten Suspensionsstoffstroms ist das im Reaktor befindliche Reaktionsvolumen und die Verweilzeit der Suspension in der Reaktoreinheit getrennt voneinander einstellbar. Die Rezirkulation der Suspension verlängert die durchschnittliche Verweilzeit der Suspension in der Reaktoreinheit, wodurch ein besserer Aufschluss des in der Reaktoreinheit befindlichen phosphathaltigen Rohstoffs erreicht wird. Die Reaktorrezirkulationseinrichtung wird im einfachsten Fall aus einer Rohrleitung und einer Fördereinrichtung ausgebildet.

Gemäß einer diesbezüglich vorteilhaften Ausgestaltung der bevorzugten Vorrichtung weist die Reaktoreinheit eine Mahleinheit für den phosphathaltigen Rohstoff auf. Durch den vor der Granulation mittels der Mahleinheit erfolgenden Mahlvorgang wird die Prozessstabilität gesteigert, indem durch den Mahlvorgang die große Rohstoffpartikel aufweisenden phosphathaltigen Rohstoffe zerkleinert werden. Hierdurch wird die Reaktionsteilnahme der Rohstoffpartikel auch durch die Vergrößerung der Oberfläche der Rohstoffpartikel erhöht, d. h. die Kinetik der Reaktion wird beschleunigt, was wiederum zu einer gleichmäßigeren Umsetzung des phosphathaltigen Rohstoffs und zu Zeitersparnis führt. Gleichzeitig wird zudem die Verstopfungsgefahr an Engstellen in der Vorrichtung, insbesondere in Düsen, an Klappen und Schiebern oder dergleichen, reduziert. Zudem werden die Sedimentation und der Grobkornanteil von Sand der Rohstoffpartikel durch den mittels der Mahleinheit durchgeführten Mahlvorgang minimiert.

Bevorzugt weist die Reaktorrezirkulationseinrichtung die Mahleinheit auf. Der Mahlvorgang des phosphathaltigen Rohstoffs während der Rezirkulation der Suspension hat den Vorteil, dass hierdurch der phosphathaltige Rohstoff in der rezirkulierenden Suspension gemahlen wird und so die vorgenannten Merkmale einer vergrößerten Reaktionsoberfläche der Phosphathaltigen Rohstoffpartikel sowie eine beschleunigte Kinetik erzielt werden, wobei insbesondere jedoch die Verstopfungsgefahr, insbesondere in Düsen, an Klappen und Schiebern oder dergleichen, reduziert wird.

Gemäß einer zusätzlichen zuträglichen Ausgestaltung der Vorrichtung ist die Mahleinheit zeitlich vor, nach und/oder in der Reaktoreinheit zur Erzeugung der Suspension aus einem phosphathaltigen Rohstoff und einer Säure angeordnet. Wird der Mahlvorgang vor der Erzeugung der Suspension in der Reaktoreinheit durchgeführt erfolgt dieser als Trockenmahlung der phosphathaltigen Rohstoffe. Im Gegensatz hierzu wird eine Nassmahlung der phosphathaltigen Rohstoffe während und/oder nach der Erzeugung der Suspension in der Reaktoreinheit eingesetzt. Bei einer Kombination von Trocken- und Nassmahlung im Verfahren findet der Mahlvorgang sowohl vor als auch während und/oder nach der Erzeugung der Suspension in der Reaktoreinheit statt. Durch den Einsatz der unterschiedlichen Mahlverfahren wird für den Anlagenbauer bei der Ausgestaltung des Verfahrens die Möglichkeit geschaffen auf die unterschiedlichen phosphathaltigen Rohstoffe einzugehen und das Verfahren stets optimal an die phosphathaltigen Rohstoffe anzupassen und auf die Vorgaben, wie bspw. die Investitionskosten, der Betreiber einzugehen. Die Trockenmahlung weist als Vorteil eine hohe Mahleffektivität bei geringem Platzbedarf und geringem spezifischen Energieverbrauch auf. Bei der Trockenmahlung ist die gewünschte Endfeinheit der Rohstoffpartikel des phosphathaltigen Rohstoffs frei und exakt einstellbar. Bei der Nassmahlung sind bei einem geringen spezifischen Energieverbrauch auch grobe phosphathaltige Rohstoffe verarbeitbar. Zudem weist die Rührwerkslagerung keine Produktberührung auf. Eine Kombination von Trocken- und Nassmahlung ermöglicht eine Nachmahlung von Suspensionen und trockenen Rohstoffen. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination mit von Trocken- und Nassmahlung den Einsatz von kontinuierlich und diskontinuierlich arbeitenden Mühlen möglich.

Nach einer diesbezüglich vorteilhaften Ausgestaltung der Vorrichtung sind Mahleinheit, Reaktoreinheit und Granulator fluidisch miteinander verbunden. Insbesondere sind Reaktoreinheit und Granulator mittels Rohrleitung, Schlauchverbindung, Transportband oder dergleichen miteinander verbunden, sodass ein der Granulator, insbesondere kontinuierlich, mit der erzeugten Suspension zur Herstellung des Düngemittelgranulats versorgbar ist.

Nach einer bevorzugten Ausgestaltung der Vorrichtung weist die Reaktoreinheit, bevorzugt der Reaktor, über einen Zerhacker. Insbesondere weist der Zerhacker einen Zerhackerantrieb, bevorzugt einen elektrischen Direktantrieb, besonders bevorzugt einen Elektro- oder Torquemotor auf. Dies hat den Vorteil, dass in der Suspension verbliebene zu große Rohstoffpartikel zu kleineren Rohstoffpartikeln durch den Zerhacker zerhackt werden, sodass diese im Verfahren problemlos weiterverarbeitet werden können.

Gemäß einer zusätzlichen vorteilhaften Ausgestaltung des Verfahrens wird die Suspension in der Reaktoreinheit mittels einer Mischeinheit durchmischt. Die Reaktoreinheit, bevorzugt der Reaktor, weist hierzu bevorzugt eine Mischeinheit auf. Insbesondere bei Reaktionen, wie zum Beispiel dem Aufschluss von Phosphaten der phosphathaltigen Rohstoffe durch Säure, ist es von höchster Wichtigkeit, den Kontakt zwischen den Reaktionspartnern sicherzustellen. Hierzu können in der Reaktoreinheit konventionelle Rühreinheiten mit Rührantrieb zum Einsatz kommen. Insbesondere weist die Rühreinheit einen Rührantrieb, bevorzugt einen elektrischen Direktantrieb, besonders bevorzugt einen Elektro- oder Torquemotor auf. Durch den Einsatz einer Rühreinheit wird die aus phosphathaltigem Rohstoff und Säure gebildete Suspension verbessert durchmischt, sodass zum einen ein optimaler Aufschluss der in dem Rohstoff gebundenen Phosphate durch die Säure erfolgt und zum anderen eine hohe Mischgüte der Suspension erreicht wird. Bevorzugt umfasst die Mischeinheit ein Mischelement, das besonders bevorzugt als statischer Mischer ausgebildet ist. Statische Mischer sind Apparate mit feststehenden Einbauten, die unter Nutzung der Strömungsenergie die Mischung fluider Produktströme, wie hier der Suspension, bewirken. Besonders bevorzugt ist die Mischeinheit in der Reaktionseinheit, vorzugsweise im als Rohrreaktor ausgebildeten Reaktor, angeordnet. Ganz besonders bevorzugt ist die Mischeinheit stromauf der Mahleinheit in der Reaktoreinheit angeordnet.

Nach einer darüber hinaus vorteilhaften Weiterbildung der Vorrichtung verfügt die Reaktoreinheit über eine Temperiereinheit zur Wärmezufuhr oder Wärmeabfuhr der Suspension. Hierbei ist die Temperiereinheit bevorzugt als Doppelmantel des Reaktors ausgebildet. Mittels Wärmezufuhr oder Wärmeabfuhr lassen sich beispielsweise durch exotherme oder endotherme Reaktionen auftretende Temperaturänderungen besonders gut abfangen, sodass die gewünschten Reaktionsbedingungen stets erreicht werden und ermöglichen somit die optimale Kontrolle über das ablaufende Verfahren. Zudem ist die Ausführungsform eines einen Doppelmantel aufweisenden Reaktors eine sehr kostengünstig in der Herstellung und sehr einfach ausführbar.

Weiter vorteilhaft verfügt die Vorrichtung über eine Klassiereinheit, bevorzugt ein Sieb oder einen Sichter. Bevorzugt ist die Klassiereinheit im Rohstoffzulauf angeordnet. Durch die Klassiereinheit erfolgt eine Trennung des phosphathaltigen Rohstoffs in Fraktionen, vorzugsweise nach den Kriterien Partikelgröße oder Partikeldichte. Ziel der Klassiereinheit ist die Herstellung von mindestens zwei Teilmengen des ursprünglichen phosphathaltigen Rohstoffs, wobei jede Teilmenge möglichst vollständig den vorgegebenen Partikelgrößenkriterien entspricht. Hierdurch wird neben dem Herausfiltern von groben Abfällen durch die Klassiereinheit eine Vorauswahl der weiterzuverarbeitenden phosphathaltigen Rohstoffpartikel erreicht, sodass das herzustellende Düngemittelgranulat eine besonders hohe Qualität aufweist.

Gemäß einer weiteren förderlichen Fortbildung der Vorrichtung ist der Granulator als Wirbelschicht- oder Strahlschichtapparat ausgebildet. Vorteilhafterweise werden hierdurch die Düngemittelgranulate hergestellt, wobei die Eigenschaften der Düngemittelgranulate gezielt einstellbar sind oder eingestellt werden.

Weiter bevorzugt weist die Reaktorrezirkulationseinrichtung einen Rohstoffzulauf, Säurezulauf und/oder einen Zulauf für eine wässrige Lösung oder Wasser aufweist. Hierdurch besteht die Möglichkeit der Reaktoreinheit phosphathaltige Rohstoffe zuzuführen oder bei Konzentrationsschwankungen der Suspension durch eine weitere Zufuhr an phosphathaltigen Rohstoffen diese auszugleichen. Auch die Zufuhr von weiterer Säure kann vorteilhaft sein, bspw. um die in den phosphathaltigen Rohstoffen gebundenen Phosphate noch besser zu lösen. Durch die Zugabe einer wässrigen Lösung oder von Wasser kann die Suspension bei einem hohen Anteil an phosphathaltigem Rohstoff aufgelockert bzw. aufgeschlämmt werden, sodass sich das Strömungsverhalten der erzeugten Suspension verbessert. Darüber hinaus wird der Mahlvorgang in der Mahleinheit verbessert bzw. vereinfacht. Bevorzugt ist der Zulauf für eine wässrige Lösung oder Wasser stromauf der Mahleinheit angeordnet, um vor dem Mahlvorgang die Suspension zusätzlich durch die Zuführung der wässrigen Lösung oder von Wasser aufzulockern.

Nach einer weiteren vorteilhaften Weiterbildung der Vorrichtung ist der Reaktor der Reaktoreinheit als Rohrreaktor ausgebildet. Die Ausbildung der Reaktoreinheit, insbesondere des Reaktors, als Rohrreaktor weist die Vorteile auf, dass diese Bauform einfach und kostengünstig realisierbar ist. Darüber hinaus weist der Rohrreaktor den Vorteil auf, dass gegenüber einem Rührkesselreaktor ein höherer Umsatz und eine höhere Selektivität erzielbar ist. Der Rohrreaktor verbindet somit die Vorteile des Batch-Reaktors (diskontinuierlicher Rührkesselreaktors) und des kontinuierlichen Rührkesselreaktors.

Nach einer weiteren vorteilhaften Weiterbildung der Vorrichtung umfasst die Vorrichtung eine pH-Wert-Regeleinrichtung. Bevorzugt ist diese in der Reaktoreinheit angeordnet. Besonders bevorzugt in dem als Rohrreaktor ausgebildeten Reaktor der Reaktoreinheit. Durch eine pH-Wert Regelung mittels pH-Wert-Regeleinrichtung besteht die Möglichkeit den pH-Wert der sich aus phosphathaltigem Rohstoff und Säure, insbesondere einer Mineralsäure, bildenden Suspension einzustellen. Die Einstellung des pH-Werts der Suspension wirkt sich auf die Klebrigkeit der Suspension aus, die wiederum für das Verdüsen der Suspension mittels Sprühtrocknungseinrichtung von sehr großer Bedeutung ist. Je saurer die Suspension, desto klebriger ist diese. Bevorzugt erfolgt pH-Wert Messung in der Suspension und die Einstellung des pH-Wertes über die pH-Wert-Regeleinrichtung. Die pH-Wert Regelung kann auch als zusätzlicher, externer Regelkreis ausgebildet sein.

Mit der Vorrichtung wird das Verfahren zur Herstellung von Düngemittelgranulat durchgeführt, wobei zuerst eine Suspension aus einem phosphathaltigen Rohstoff und einer Säure in einer Reaktoreinheit erzeugt und diese danach einem Granulator zur Granulation zugeführt wird, und wobei die in der Reaktoreinheit erzeugte Suspension vor der Granulation in der Reaktoreinheit rezirkuliert wird. Durch die Rezirkulation bzw. die Änderung des Anteils des rezirkulierten Suspensionsstoffstroms ist das im Reaktor befindliche Reaktionsvolumen und die Verweilzeit der Suspension in der Reaktoreinheit getrennt voneinander einstellbar. Die Rezirkulation der Suspension verlängert die durchschnittliche Verweilzeit der Suspension in der Reaktoreinheit, wodurch ein besserer Aufschluss des in der Reaktoreinheit befindlichen phosphathaltigen Rohstoffs erreicht wird.

Düngemittel sind Stoffe und Stoffgemische, welche in der Land- und Forstwirtschaft sowie im Gartenbau zur Ergänzung des Nährstoffangebots für die angebauten Pflanzen, insbesondere Kulturpflanzen, mit diversen Eigenschaften, gegebenenfalls kombiniert und/oder funktionalisiert mit weiteren Materialien, benutzt werden.

Düngemittelgranulate sind Düngemittel in Granulatform, insbesondere mit einer annähernd sphärischen Form, einer vorzugsweiseausreichenden Eigenfestigkeit und vornehmlich einer mittleren Granulatgröße von 100 *µ*m bis 25 mm, bevorzugt von 100 *µ*m bis 10 mm, besonders bevorzugt von 250 *µ*m bis 5 mm, ganz besonders bevorzugt von 500 *µ*m bis 3 mm.

Entsprechend einer vorteilhaften Ausgestaltung des bevorzugten Verfahrens findet in der Reaktoreinheit ein Mahlvorgang des phosphathaltigen Rohstoffs statt. Durch den vor der Granulation erfolgenden Mahlvorgang wird die Prozessstabilität gesteigert, indem durch den Mahlvorgang die große Rohstoffpartikel aufweisenden phosphathaltigen Rohstoffe zerkleinert werden. Hierdurch wird die Reaktionsteilnahme der Rohstoffpartikel auch durch die Vergrößerung der Oberfläche der Rohstoffpartikel erhöht, d. h. die Kinetik der Reaktion wird beschleunigt, was wiederum zu einer gleichmäßigeren Umsetzung des phosphathaltigen Rohstoffs und zu Zeitersparnis führt. Gleichzeitig wird zudem die Verstopfungsgefahr an Engstellen in der Vorrichtung, insbesondere in Düsen, an Klappen und Schiebern oder dergleichen, reduziert. Zudem wird die Sedimentation und der Grobkornanteil der Rohstoffpartikel durch den Mahlvorgang minimiert.

Darüber hinaus weiter bevorzugt findet der Mahlvorgang des phosphathaltigen Rohstoffs während der Rezirkulation der Suspension statt. Hierdurch wird der phosphathaltige Rohstoff in der rezirkulierenden Suspension gemahlen und so die vorgenannten Merkmale erzielt, insbesondere wird jedoch die Verstopfungsgefahr, insbesondere in Düsen, an Klappen und Schiebern oder dergleichen, reduziert.

Entsprechend einer diesbezüglich vorteilhaften Weiterbildung des Verfahrens wird der Mahlvorgang als Trockenmahlung und/oder Nassmahlung durchgeführt. Die Trockenmahlung weist als Vorteil eine hohe Mahleffektivität bei geringem Platzbedarf und geringem spezifischen Energieverbrauch auf. Bei der Trockenmahlung ist die gewünschte Endfeinheit der Rohstoffpartikel des phosphathaltigen Rohstoffs frei und exakt einstellbar. Bei der Nassmahlung sind bei einem geringen spezifischen Energieverbrauch auch grobe phosphathaltige Rohstoffe verarbeitbar. Zudem weist die Rührwerkslagerung keine Produktberührung auf. Eine Kombination von Trocken- und Nassmahlung ermöglicht eine Nachmahlung von Suspensionen und trockenen Rohstoffen. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination mit von Trocken- und Nassmahlung den Einsatz von kontinuierlich und diskontinuierlich arbeitenden Mühlen möglich.

Nach einer weiteren zuträglichen Fortbildung des Verfahrens erfolgt der Mahlvorgang vor, während und/oder nach der Erzeugung der Suspension erfolgt. Wird der Mahlvorgang vor der Erzeugung der Suspension in der Reaktoreinheit durchgeführt erfolgt dieser als Trockenmahlung der phosphathaltigen Rohstoffe. Im Gegensatz hierzu wird eine Nassmahlung der phosphathaltigen Rohstoffe während und/oder nach der Erzeugung der Suspension in der Reaktoreinheit eingesetzt. Bei einer Kombination von Trocken- und Nassmahlung im Verfahren findet der Mahlvorgang sowohl vor als auch während und/oder nach der Erzeugung der Suspension in der Reaktoreinheit statt. Durch den Einsatz der unterschiedlichen Mahlverfahren wird für den Anlagenbauer bei der Ausgestaltung des Verfahrens die Möglichkeit geschaffen auf die unterschiedlichen phosphathaltigen Rohstoffe einzugehen und das Verfahren stets optimal an die phosphathaltigen Rohstoffe anzupassen.

Gemäß einer vorteilhaften Ausgestaltung des Verfahrens ist die Säure eine Mineralsäure oder ein beliebiges Gemisch aus den Mineralsäuren, bevorzugt Salzsäure, Schwefelsäure, Salpetersäure oder Phosphorsäure.

Gemäß einer zusätzlichen vorteilhaften Ausgestaltung des Verfahrens wird die Suspension in der Reaktoreinheit mittels einer Mischeinheit durchmischt. Insbesondere bei Reaktionen, wie zum Beispiel dem Aufschluss von Phosphaten der phosphathaltigen Rohstoffe durch Säure, ist es von höchster Wichtigkeit, den Kontakt zwischen den Reaktionspartnern sicherzustellen. Hierzu können in der Reaktoreinheit konventionelle Rühreinheiten mit Rührantrieb zum Einsatz kommen. Durch den Einsatz einer Rühreinheit wird die aus phosphathaltigem Rohstoff und Säure gebildete Suspension verbessert durchmischt, sodass zum einen ein optimaler Aufschluss der in dem Rohstoff gebundenen Phosphate durch die Säure erfolgt und zum anderen eine hohe Mischgüte der Suspension erreicht wird. Bevorzugt umfasst die Mischeinheit ein Mischelement, das besonders bevorzugt als statischer Mischer ausgebildet ist. Statische Mischer sind Apparate mit feststehenden Einbauten, die unter Nutzung der Strömungsenergie die Mischung fluider Produktströme, wie hier der Suspension, bewirken. Besonders bevorzugt ist die Mischeinheit in der Reaktionseinheit, vorzugsweise im als Rohrreaktor ausgebildeten Reaktor, angeordnet. Ganz besonders bevorzugt ist die Mischeinheit stromauf der Mahleinheit in der Reaktoreinheit angeordnet.

Die Suspension wird bevorzugt unter Wärmezufuhr oder Wärmeabfuhr erzeugt. Mittels Wärmezufuhr oder Wärmeabfuhr lassen sich beispielsweise durch exotherme oder endotherme Reaktionen auftretende Temperaturänderungen besonders gut abfangen, sodass die gewünschten Reaktionsbedingungen stets erreicht werden und ermöglichen somit die optimale Kontrolle über das ablaufende Verfahren.

Entsprechend einer zusätzlichen Fortbildung des Verfahrens wird die in der Reaktoreinheit erzeugte Suspension mittels eines Zerhackers in der Reaktoreinheit zerkleinert. Dies hat den Vorteil, dass in der Suspension verbliebene zu große Rohstoffpartikel zu kleineren Rohstoffpartikeln zerhackt werden, sodass diese im Verfahren problemlos weiterverarbeitet werden können.

Gemäß einer weiteren vorteilhaften Ausgestaltung des Verfahrens werden in der in der Reaktoreinheit erzeugten Suspension die schwerlöslichen Phosphate des phosphathaltigen Rohstoffs zumindest teilweise gelöst und in eine neutral-ammoniumcitratlösliche Phosphatphase umgewandelt, sodass sich ein Düngemittelgranulat bildet dessen P₂O₅-Gehalt (P-Anteil) größer 75 % neutral-ammoniumcitratlöslich ist. Die Löslichkeiten liefern Anhaltspunkte für die Wirkungsdynamik des jeweiligen Düngemittels geben. Der säurelösliche P-Anteil von Düngemitteln wird als langfristig nutzbar angesehen. Langfristig bedeutet hierbei über mehrere Fruchtfolgen hinweg. Dieser in "Königswasser" lösliche P-Anteil wird als Gesamtgehalt bezeichnet. Der neutral-ammoniumcitratlösliche P-Anteil kann als Anhaltspunkt für die mittelfristige Verfügbarkeit des Phosphats herangezogen werden, d. h. über den Zeitraum von etwa einer Fruchtfolge und der unmittelbar verfügbare P-Anteil eines Düngemittels wird durch seine Löslichkeit in Wasser beschrieben. Je höher der wasserlösliche Anteil, desto schneller bzw. leichter die Verfügbarkeit des Dünge-P für die Pflanze. Die Löslichkeiten haben in erster Linie den Zweck, jeweils ganz bestimmte Phosphatdüngemittel zu charakterisieren, d. h. sie in ihren typbestimmenden Bestandteilen zu beschreiben.

Darüber hinaus wird bei einer weiteren vorteilhaften Ausgestaltung des Verfahrens der phosphathaltige Rohstoff zeitlich vor einer Zuführung zur Reaktoreinheit, d. h. stromauf der Reaktoreinheit, klassiert. Vorzugsweise erfolgt das Klassieren durch Sieben oder Sichten. Hierdurch wird neben dem Herausfiltern von groben Abfällen eine Vorauswahl der weiterzuverarbeitenden phosphathaltigen Rohstoffpartikel erreicht, sodass das herzustellende Düngemittelgranulat eine besonders hohe Qualität aufweist, da ausschließlich Rohstoffpartikel mit einem bestimmten maximalen Durchmesser verarbeitet werden. Die Trennung des phosphathaltigen Rohstoffs erfolgt in Fraktionen, vorzugsweise nach den Kriterien Partikelgröße oder Partikeldichte, mit dem Ziel die Herstellung von mindestens zwei Teilmengen des ursprünglichen phosphathaltigen Rohstoffs zu erreichen, wobei jede Teilmenge möglichst vollständig den vorgegebenen Partikelgrößenkriterien für die Weiterverarbeitung entspricht.

Entsprechend einer zusätzlichen vorteilhaften Ausgestaltung des Verfahrens wird der Reaktoreinheit eine wässrige Lösung oder Wasser zugeführt. Die Zuführung einer wässrigen Lösung oder von Wasser ermöglicht eine gezielte Aufschlämmung der erzeugten Suspension, um eine verbesserte Durchmischung, eine Auflockerung und bessere Fließeigenschaften der Suspension zu erzielen, sodass u. a. der Mahlvorgang in der Mahleinheit erleichtert wird. Bevorzugt wird der Reaktoreinheit die wässrige Lösung oder Wasser zwischen Mischvorgang in der Mischeinheit und Mahlvorgang in der Mahleinheit zugeführt.

Nach einer zusätzlichen vorteilhaften Weiterbildung des Verfahrens wird ein pH-Wert der Suspension in der Reaktoreinheit eingestellt, um eine Klebrigkeit der Suspension einzustellen. Bevorzugt wird der pH-Wert der Suspension zeitlich vor der Granulation eingestellt. Hierzu wird vorzugsweise in der Reaktoreinheit nach dem Mahlvorgang eine Messung des pH-Istwerts der Suspension durchgeführt. Dieser wird anschließend in einer Regeleinrichtung mit einem für das Verfahren, insbesondere die Sprühtrocknung, vorgegebenen pH-Sollwert abgeglichen und entsprechend eingeregelt. Der Reaktoreinheit wird zur Einstellung des pH-Werts besonders bevorzugt eine Säure oder eine Lauge zugeführt. Durch die pH-Wert Regelung bspw. mittels pH-Wert-Regeleinrichtung besteht somit die Möglichkeit den pH-Wert der sich aus phosphathaltigem Rohstoff und Säure, insbesondere einer Mineralsäure, bildenden Suspension einzustellen. Die Einstellung des pH-Werts der Suspension wirkt sich entsprechend auf die Klebrigkeit der Suspension aus, die wiederum für das Verdüsen der Suspension mittels Sprühtrocknungseinrichtung von sehr großer Bedeutung ist. Die pH-Wert Regelung kann auch als zusätzlicher externer Regelkreis ausgebildet sein.

Weitere Vorteile und vorteilhafte Ausgestaltungen der Erfindung sind der nachfolgenden Beschreibung und den Ansprüchen und entnehmbar.

Nachfolgend wird die Erfindung anhand der beiliegenden Zeichnung näher erläutert dieser zeigen
- Figur 1: ein Grundfließbild eines ersten Ausführungsbeispiels einer bevorzugten Vorrichtung, wobei eine Reaktoreinheit der Vorrichtung über eine Reaktorrezirkulationseinrichtung für eine erzeugte Suspension verfügt,
- Figur 2: ein Grundfließbild eines zweiten Ausführungsbeispiels einer bevorzugten Vorrichtung, wobei eine Reaktoreinheit der Vorrichtung über eine eine Mischeinheit aufweisende Reaktorrezirkulationseinrichtung für eine erzeugte Suspension verfügt,
- Figur 3: ein Grundfließbild eines dritten Ausführungsbeispiels einer bevorzugten Vorrichtung, wobei eine Reaktoreinheit der Vorrichtung über eine eine Mischeinheit aufweisende Reaktorrezirkulationseinrichtung für eine erzeugte Suspension verfügt und die Vorrichtung eine pH-Wert-Regeleinrichtung aufweist,
- Figur 4: ein Grundfließbild eines vierten Ausführungsbeispiels einer bevorzugten Vorrichtung, wobei eine Reaktoreinheit der Vorrichtung über eine eine Mischeinheit aufweisende Reaktorrezirkulationseinrichtung für eine erzeugte Suspension und einen Zulauf für einen wässrige Lösung oder Wasser verfügt,
- Figur 5: ein Grundfließbild eines fünften Ausführungsbeispiels einer bevorzugten Vorrichtung,
- Figur 6: ein Grundfließbild eines sechsten Ausführungsbeispiels einer eine in einer Reaktoreinheit angeordnete Mahleinheit aufweisenden bevorzugten Vorrichtung zur Erzeugung der Suspension aus einem phosphathaltigen Rohstoff und einer Säure, wobei stromauf einer Mahleinheit eine Mischeinheit angeordnet ist, und wobei die Reaktoreinheit über eine Reaktorrezirkulationseinrichtung für die Suspension verfügt.
- Figur 7: ein Grundfließbild eines siebtes Ausführungsbeispiels einer bevorzugten Vorrichtung, und
- Figur 8: ein Grundfließbild eines achtes Ausführungsbeispiels einer bevorzugten Vorrichtung.

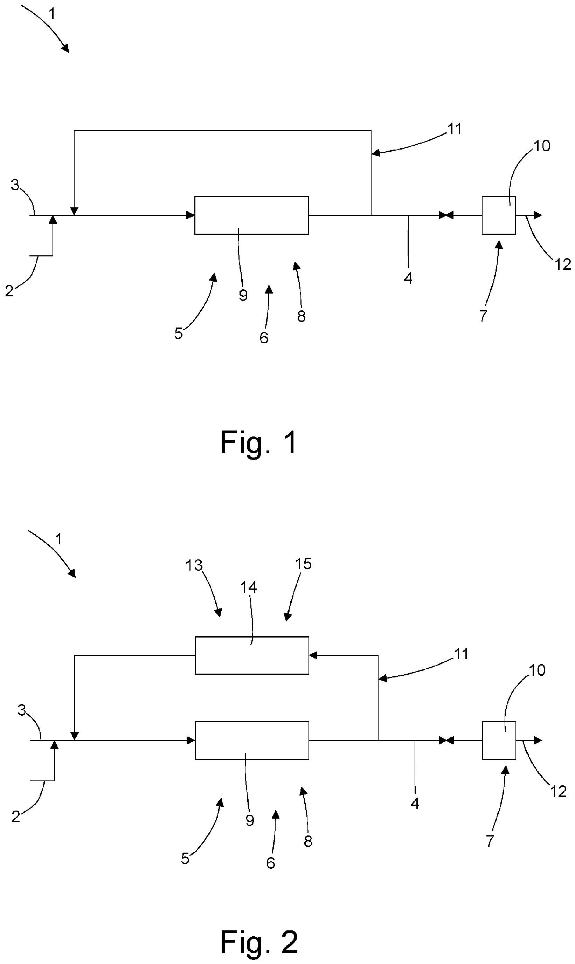

Fig. 1 zeigt ein Grundfließbild eines ersten Ausführungsbeispiels einer bevorzugten Vorrichtung 1.

Die Vorrichtung 1 zur Herstellung von Düngemittelgranulat umfasst eine über einen Rohstoffzulauf 2, einen Säurezulauf 3 und einen Reaktorablauf 4 verfügende, einen Reaktor 5 aufweisende Reaktoreinheit 6 zur Erzeugung einer Suspension aus dem phosphathaltigen Rohstoff und einer Säure sowie einen Granulator 7 zur Granulation der erzeugten Suspension.

Der Reaktor 5 der Reaktoreinheit 6 ist im ersten Ausführungsbeispiel als Rohrreaktor 8 ausgebildet. Eine Ausbildung als Rührkesselreaktor, insbesondere in kontinuierlicher Ausführungsform, oder ein sonstiger Reaktortyp ist jedoch ebenso möglich.

Über den Rohstoffzulauf 2 wird der Vorrichtung 1 phosphathaltiger Rohstoff zugeführt. Hierbei werden bspw. Aschen aus der Mono- oder Mitverbrennung von Klärschlamm, Tierausscheidungen, Tiermehl, Tierresten und Tierkörpern, Aschen aus der Verbrennung von Gülle und Gärresten als Einzelstoff bzw. Gemische daraus, oder Gemische hieraus als phosphathaltige Rohstoffe bezeichnet.

Als Säure werden bevorzugt Mineralsäuren, nämlich Salz-, Schwefel-, Salpeter- oder Phosphorsäure, oder ein beliebiges Gemisch aus den vorgenannten Mineralsäuren der Vorrichtung 1 über den Säurezulauf 3 zugeführt. Aufgrund der Verwendung von Säure sind die Bauteile der nachfolgend beschriebenen Vorrichtungen 1 bevorzugt allesamt so ausgebildet, dass diese einer säurebedingten Korrosion standhalten.

Die Vorrichtung 1 weist zudem eine Mahleinheit 9 zur Zerkleinerung des der Reaktoreinheit 6 zugeführten phosphathaltigen Rohstoffs auf. Diese ist im ersten Ausführungsbeispiel in der Reaktoreinheit 6 zur Erzeugung der Suspension aus einem phosphathaltigen Rohstoff und einer bevorzugten Mineralsäure angeordnet. Dadurch erfolgt der Mahlvorgang der phosphathaltigen Rohstoffe nach und/oder während der Erzeugung der Suspension im Reaktor 5 der Reaktoreinheit 6 als Nassmahlung. Diese weist einen geringen spezifischen Energieverbrauch auf und ermöglicht zudem das Verarbeiten von gröberen phosphathaltigen Rohstoffen. Darüber hinaus weist die Rührwerkslagerung keine Produktberührung auf.

Die Mahleinheit 9, die Reaktoreinheit 6 und der als Strahlsichtapparat 10 ausgebildete Granulator 7 sind im ersten Ausführungsbeispiel fluidisch miteinander verbunden. Insbesondere wird die fluidische Verbindung der einzelnen Vorrichtungskomponenten durch Leitungen, insbesondere Rohr- oder flexible Schlauchleitungen, hergestellt.

Zusätzlich verfügt im ersten Ausführungsbeispiel die Reaktoreinheit 6 der Vorrichtung 1 über eine Reaktorrezirkulationseinrichtung 11 für die erzeugte Suspension. Die Reaktorrezirkulationseinrichtung 11 zweigt einen Teil der von der Reaktoreinheit 6 zum Granulator 7 strömenden Suspension ab und führt diesen stromauf der Mahleinheit 9 zurück in die Reaktoreinheit 6.

Das Verfahren zur Herstellung von Düngemittelgranulat läuft in der dem ersten Ausführungsbeispiel entsprechenden Vorrichtung 1 wie folgt ab:
Zuerst wird dem Reaktor 5 der Reaktoreinheit 6 über den Rohstoffzulauf 2 ein phosphathaltiger Rohstoff zugeführt.

Dem Reaktor 5 der Reaktoreinheit 6 wird zudem, insbesondere parallel zur Zuführung des phosphathaltigen Rohstoffs über den Säurezulauf 3 eine Säure, bevorzugt eine Mineralsäure, bspw. Salz-, Schwefel-, Salpeter- oder Phosphorsäure, oder ein beliebiges Gemisch aus den vorgenannten Mineralsäuren, zugeführt.

Im Reaktor 5 der Reaktoreinheit 6 bilden phosphathaltiger Rohstoff und Säure eine Suspension aus.

Die im Reaktor 5 erzeugte Suspension durchströmt die Reaktoreinheit 6 in Richtung des Granulators 7. Hierbei werden die phosphathaltigen Rohstoffe durch die Mahleinheit 9 zerkleinert bzw. gemahlen. Der in der Mahleinheit 2 ablaufende Mahlvorgang der phosphathaltigen Rohstoffe erfolgt als Nassmahlung, die einen geringen spezifischen Energieverbrauch aufweist und zudem das Verarbeiten von gröberen phosphathaltigen Rohstoffen ermöglicht. Darüber hinaus weist die Rührwerkslagerung keine Produktberührung auf.

Die Reaktorrezirkulationseinrichtung 11 wird im einfachsten Fall aus einer Rohrleitung und einer Fördereinrichtung ausgebildet. Über die Reaktorrezirkulationseinrichtung 11 wird ein Teil der gemahlenen, erzeugten Suspension zurück vor die Mahleinheit 9 in die Reaktoreinheit 6 geführt. Durch die Rezirkulation bzw. die Änderung des Anteils des rezirkulierten Suspensionsstoffstroms ist das im Reaktor 5 der Reaktoreinheit 6 befindliche Reaktionsvolumen und die Verweilzeit der Suspension in der Reaktoreinheit 6 getrennt voneinander einstellbar. Die Rezirkulation der Suspension verlängert die durchschnittliche Verweilzeit der Suspension in der Reaktoreinheit 6, sodass ein besserer Aufschluss des in der Reaktoreinheit befindlichen phosphathaltigen Rohstoffs erreicht wird bzw. erreichbar ist.

Im Anschluss wird die im Reaktor 5 der Reaktoreinheit 6 erzeugte Suspension nach ihrer Verweilzeit Reaktor 5 über den Reaktorablauf 4 dem als Strahlschichtapparat 10 ausgebildeten Granulator 7 zur Granulation zugeführt. Die fertigen Düngemittelgranulate werden dem Granulator 7 nach ihrer Herstellung über den Austrag 12 entnommen.

Düngemittel sind Stoffe und Stoffgemische, welche in der Land- und Forstwirtschaft sowie im Gartenbau zur Ergänzung des Nährstoffangebots für die angebauten Pflanzen, insbesondere Kulturpflanzen, mit diversen Eigenschaften, gegebenenfalls kombiniert und/oder funktionalisiert mit weiteren Materialien, benutzt werden.

Die hergestellten Düngemittelgranulate sind Düngemittel in Granulatform, insbesondere mit einer annähernd sphärischen Form, einer vorzugsweiseausreichenden Eigenfestigkeit und vornehmlich einer mittleren Granulatgröße von 100 *µ*m bis 25 mm, bevorzugt von 100 *µ*m bis 10 mm, besonders bevorzugt von 250 *µ*m bis 5 mm, ganz besonders bevorzugt von 500 *µ*m bis 3 mm.

Bevorzugt wird die mit dem phosphathaltigen Rohstoff reagierende Säure, bevorzugt eine Mineralsäure, derart passend zu den phosphathaltigen Rohstoffen ausgewählt, dass in der in der Reaktoreinheit 6 erzeugten Suspension während ihrer Verweilzeit im Reaktor 5 die schwerlöslichen Phosphate des phosphathaltigen Rohstoffs durch die Säure zumindest teilweise gelöst und in eine neutral-ammoniumcitratlösliche Phosphatphase umgewandelt werden, sodass sich ein Düngemittelgranulat bildet dessen P₂O₅-Gehalt (P-Gehalt) größer 75 % neutral-ammoniumcitratlöslich ist. Durch die aufgrund des Mahlvorgangs feineren phosphathaltigen Rohstoffpartikel weisen diese eine größere reaktive Oberfläche auf, sodass aus dem phosphathaltigen Rohstoff die schwerlöslichen Phosphate mittels der Säure verbessert herauslösbar sind. Bevorzugt ist der erhaltene P-Gehalt der Düngemittelgranulate sogar größer 80 % neutral-ammoniumcitratlöslich, besonders bevorzugt größer 85 % neutral-ammoniumcitratlöslich.

Sowohl der in Fig. 1 beschriebene grundsätzliche Aufbau der Vorrichtung 1 als auch das auf der Vorrichtung 1 beruhende Verfahren werden in den weiteren Ausführungsbeispielen lediglich minimal modifiziert. Die Bezugszeichen werden für gleiche Bauteile in den weiteren Ausführungsbeispielen beibehalten.

In der Fig. 2 wird ein Grundfließbild eines zweiten Ausführungsbeispiels einer bevorzugten Vorrichtung 1 gezeigt.

Im Unterschied zum ersten Ausführungsbeispiel weist die Vorrichtung 1 des zweiten Ausführungsbeispiels eine Reaktoreinheit 6 auf, die über eine eine Mischeinheit 13 aufweisende Reaktorrezirkulationseinrichtung 11 für eine erzeugte Suspension verfügt. Hierdurch wird die in der Reaktoreinheit 6 mittels der Mischeinheit 13 erzeugte Suspension bei Durchströmen der Reaktorrezirkulationseinrichtung 11 durchmischt.

Im zweiten Ausführungsbeispiel umfasst die Mischeinheit 13 ein als statischer Mischer 14 ausgebildetes Mischelement 15. Der statische Mischer 14 nutzt seine feststehenden Einbauten, um mittels der Strömungsenergie die Mischung fluider Produktströme, wie hier der Suspension, zu bewirken. Durch den Einsatz des statischen Mischers 14 wird die aus phosphathaltigem Rohstoff und Säure gebildete Suspension verbessert durchmischt, sodass zum einen ein optimaler Aufschluss der in dem Rohstoff gebundenen Phosphate durch die Säure erfolgt und zum anderen eine hohe Mischgüte der Suspension erreicht wird.

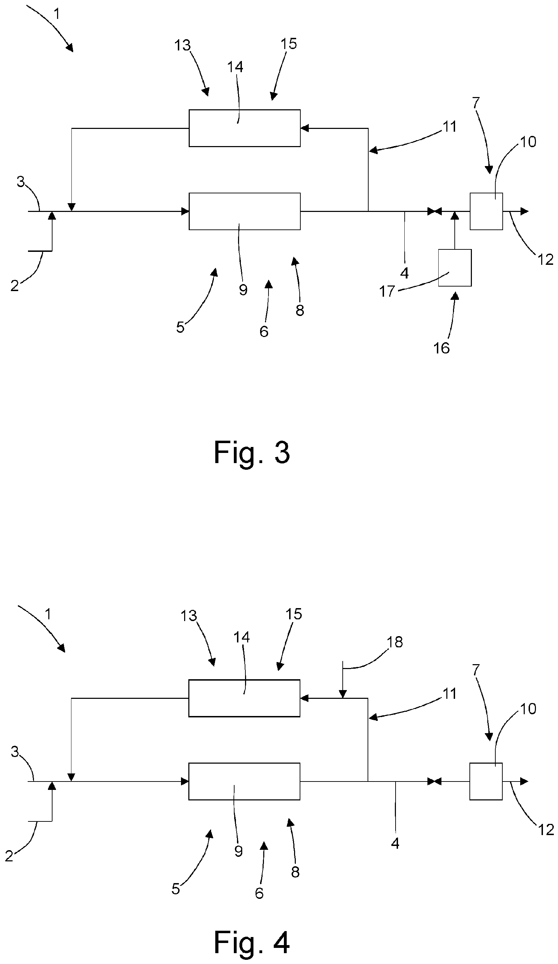

Fig. 3 zeigt ein Grundfließbild eines dritten Ausführungsbeispiels einer bevorzugten Vorrichtung 1, wobei eine Reaktoreinheit 6 der Vorrichtung 1 über eine eine Mischeinheit 13 aufweisende Reaktorrezirkulationseinrichtung 11 für eine erzeugte Suspension verfügt und die Vorrichtung 1 zudem eine pH-Wert-Regeleinrichtung 16 aufweist.

Die pH-Wert-Regeleinrichtung 16 umfasst eine integrierte pH-Wert-Messeinrichtung 17 auf. Die pH-Wert-Messeinrichtung 17 misst den pH-Istwert der Suspension und übermittelt das Ergebnis an die pH-Wert-Regeleinrichtung 16, die den pH-Istwert mit einem vorgegebenen pH-Sollwert vergleicht und den pH-Wert der Suspension zeitlich vor der Granulation auf den gewünschten pH-Wert einstellt. Der gemessene pH-Wert gibt Auskunft über die Klebrigkeit der Suspension. Je saurer die Suspension, desto klebriger ist diese. Besonders bevorzugt wird der Reaktoreinheit 6 zur Einstellung des pH-Werts eine Säure oder eine Lauge zugeführt.

Durch eine mittels pH-Wert-Regeleinrichtung 16 erfolgte pH-Wert Regelung besteht die Möglichkeit den pH-Wert der sich aus phosphathaltigem Rohstoff und Säure, insbesondere einer Mineralsäure, bildenden Suspension einzustellen. Die Einstellung des pH-Werts der Suspension wirkt sich auf die Klebrigkeit der Suspension aus, die wiederum für das Verdüsen der Suspension im Granulator von sehr großer Bedeutung ist. Die pH-Wert Regelung kann auch als zusätzlicher, externer Regelkreis ausgebildet sein.

In Fig. 4 wird ein Grundfließbild eines vierten Ausführungsbeispiels einer bevorzugten Vorrichtung 1 dargestellt.

Im Unterschied zum zweiten Ausführungsbeispiel weist die Vorrichtung 1 des vierten Ausführungsbeispiels zusätzlich einen in der Reaktorrezirkulationseinrichtung 11 für eine erzeugte Suspension angeordneten Zulauf 18 für eine wässrige Lösung oder Wasser auf. Der Zulauf 18 könnte auch als zusätzlicher Rohstoffzulauf, oder Säurezulauf ausgebildet sein.

Durch die Zugabe einer wässrigen Lösung oder von Wasser über den Zulauf 18 kann die Suspension bei einem hohen Anteil an phosphathaltigem Rohstoff aufgelockert bzw. aufgeschlämmt werden, sodass sich das Strömungsverhalten der erzeugten Suspension verbessert. Darüber hinaus wird der Mahlvorgang in der Mahleinheit 9 verbessert bzw. vereinfacht.

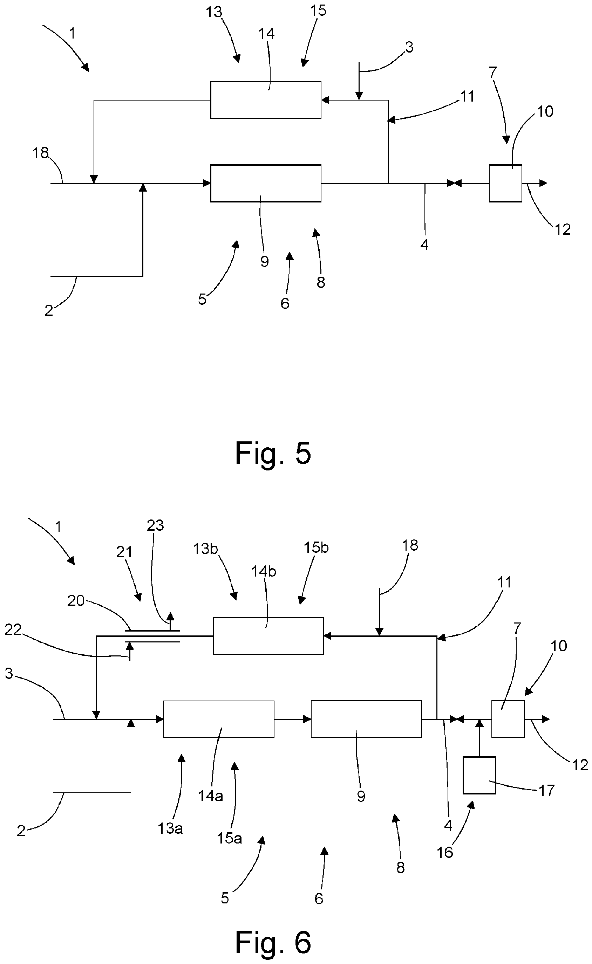

Fig. 6 zeigt ein Grundfließbild eines fünften Ausführungsbeispiels einer bevorzugten Vorrichtung 1.

Im Unterschied zum vierten Ausführungsbeispiel sind im fünften Ausführungsbeispiel Rohstoffzulauf 2, Säurezulauf 3 und ein Zulauf 16 für eine wässrige Lösung oder Wasser an anderen Positionen der Reaktoreinheit 6 der Vorrichtung 1 angeordnet.

Die Reaktoreinheit 6 der Vorrichtung 1 verfügt zudem über eine eine Mischeinheit aufweisende Reaktorrezirkulationseinrichtung für eine erzeugte Suspension und einen Säurezulauf in der Reaktorrezirkulationseinrichtung

Das Verfahren zur Herstellung von Düngemittelgranulat läuft in der dem fünften Ausführungsbeispiel entsprechenden Vorrichtung 1 wie folgt ab:
Zuerst wird dem Reaktor 5 der Reaktoreinheit 6 über den Zulauf 16 Wasser zugeführt.

Parallel zur Zugabe von Wasser wird dem Reaktor 5 der Reaktoreinheit 6 über den Rohstoffzulauf 2 ein phosphathaltiger Rohstoff zugeführt.

Im Reaktor 5 der Reaktoreinheit 6 bilden phosphathaltiger Rohstoff und Wasser eine Suspension in Form einer Aufschlämmung aus.

Die im Reaktor 5 erzeugte Suspension durchströmt die Reaktoreinheit 6 in Richtung des Granulators 7. Hierbei werden die phosphathaltigen Rohstoffe durch die Mahleinheit 9 zerkleinert bzw. gemahlen. Der in der Mahleinheit 2 ablaufende Mahlvorgang der phosphathaltigen Rohstoffe erfolgt als Nassmahlung, die einen geringen spezifischen Energieverbrauch aufweist und zudem das Verarbeiten von gröberen phosphathaltigen Rohstoffen ermöglicht. Darüber hinaus weist die Rührwerkslagerung keine Produktberührung auf.

Über die Reaktorrezirkulationseinrichtung 11 wird ein Teil der gemahlenen, erzeugten Suspension zurück vor die Mahleinheit 9 und den Rohstoffzulauf 2 in die Reaktoreinheit 6 geführt. Durch die Rezirkulation bzw. die Änderung des Anteils des rezirkulierten Suspensionsstoffstroms ist das im Reaktor 5 der Reaktoreinheit 6 befindliche Reaktionsvolumen und die Verweilzeit der Suspension in der Reaktoreinheit 6 getrennt voneinander einstellbar. Die Rezirkulation der Suspension verlängert die durchschnittliche Verweilzeit der Suspension in der Reaktoreinheit 6, sodass ein besserer Aufschluss des in der Reaktoreinheit befindlichen phosphathaltigen Rohstoffs erreicht wird bzw. erreichbar ist. Hierbei wird die Reaktorrezirkulationseinrichtung 11 im einfachsten Fall aus einer Rohrleitung und einer Fördereinrichtung ausgebildet.

Dem Reaktor 5 der Reaktoreinheit 6 wird in der Reaktorrezirkulationseinrichtung 11 über den Säurezulauf 3 eine Säure, bevorzugt eine Mineralsäure, bspw. Salz-, Schwefel-, Salpeter- oder Phosphorsäure, oder ein beliebiges Gemisch aus den vorgenannten Mineralsäuren, zugeführt. Durch die Säure erfolgt ein Aufschluss der in dem phosphathaltigen Rohstoff enthaltenen Phosphat.

Durch die unterschiedlichen Zugabezeitpunkte und Zugabeorte von phosphathaltigem Rohstoff, Säure und Wasser ist es möglich die Reaktionsparameter einzustellen und somit den Reaktionsverlauf zu beeinflussen. Bspw. wird die Säure durch vorherige Zugabe von Wasser abgeschwächt.

Im Anschluss wird die im Reaktor 5 der Reaktoreinheit 6 erzeugte Suspension nach ihrer Verweilzeit Reaktor 5 über den Reaktorablauf 4 dem als Strahlschichtapparat 10 ausgebildeten Granulator 7 zur Granulation zugeführt. Die fertigen Düngemittelgranulate werden dem Granulator 7 nach ihrer Herstellung über den Austrag 12 entnommen.

Düngemittel sind Stoffe und Stoffgemische, welche in der Land- und Forstwirtschaft sowie im Gartenbau zur Ergänzung des Nährstoffangebots für die angebauten Pflanzen, insbesondere Kulturpflanzen, mit diversen Eigenschaften, gegebenenfalls kombiniert und/oder funktionalisiert mit weiteren Materialien, benutzt werden.

Die hergestellten Düngemittelgranulate sind Düngemittel in Granulatform, insbesondere mit einer annähernd sphärischen Form, einer vorzugsweiseausreichenden Eigenfestigkeit und vornehmlich einer mittleren Granulatgröße von 100 *µ*m bis 25 mm, bevorzugt von 100 *µ*m bis 10 mm, besonders bevorzugt von 250 *µ*m bis 5 mm, ganz besonders bevorzugt von 500 *µ*m bis 3 mm.

Bevorzugt wird die mit dem phosphathaltigen Rohstoff reagierende Säure, bevorzugt eine Mineralsäure, derart passend zu den phosphathaltigen Rohstoffen ausgewählt, dass in der in der Reaktoreinheit 6 erzeugten Suspension während ihrer Verweilzeit im Reaktor 5 die schwerlöslichen Phosphate des phosphathaltigen Rohstoffs durch die Säure zumindest teilweise gelöst und in eine neutral-ammoniumcitratlösliche Phosphatphase umgewandelt werden, sodass sich ein Düngemittelgranulat bildet dessen P₂O₅-Gehalt (P-Gehalt) größer 75 % neutral-ammoniumcitratlöslich ist. Durch die aufgrund des Mahlvorgangs feineren phosphathaltigen Rohstoffpartikel weisen diese eine größere reaktive Oberfläche auf, sodass aus dem phosphathaltigen Rohstoff die schwerlöslichen Phosphate mittels der Säure verbessert herauslösbar sind. Bevorzugt ist der erhaltene P-Gehalt der Düngemittelgranulate sogar größer 80 % neutral-ammoniumcitratlöslich, besonders bevorzugt größer 85 % neutral-ammoniumcitratlöslich.

Fig. 6 zeigt ein Grundfließbild eines sechsten Ausführungsbeispiels einer eine in einer Reaktoreinheit 6 angeordnete Mahleinheit 9 aufweisenden bevorzugten Vorrichtung 1 zur Erzeugung der Suspension aus einem phosphathaltigen Rohstoff und einer Säure, wobei stromauf einer Mahleinheit 9 eine Mischeinheit 13 angeordnet ist, und wobei die Reaktoreinheit 6 über eine Reaktorrezirkulationseinrichtung 11 für die Suspension verfügt.

Auch im sechsten Ausführungsbeispiel ist die Säure bevorzugt eine Mineralsäure oder ein beliebiges Gemisch aus Mineralsäuren, nämlich Salz-, Schwefel-, Salpeter- oder Phosphorsäure.

Die Vorrichtung 1 zur Herstellung von Düngemittelgranulat weist die über einen Rohstoffzulauf 2 für die phosphathaltigen Rohstoffe, einen Säurezulauf 3 für die bevorzugten Mineralsäuren und einen Reaktorablauf 4 für die Suspension verfügende und einen als Rohrreaktor 8 ausgebildeten Reaktor 5 zur Erzeugung einer Suspension aus dem phosphathaltigen Rohstoff und der Säure aufweisende Reaktoreinheit 6 sowie einen stromab der Reaktoreinheit 6 angeordneten Granulator 7. Der Granulator 7 ist im Ausführungsbeispiel als Wirbelschichtapparat 19 ausgebildet.

Zudem verfügt die als Rohrreaktor 8 ausgebildete Reaktoreinheit 6 über eine ein als statischen Mischer 14a ausgebildetes Mischelement 15a aufweisende erste Mischeinheit 13a und stromab der ersten Mischeinheit 13a über eine Mahleinheit 2. Der somit im sechsten Ausführungsbeispiel durchgeführte Mahlvorgang ist eine Nassmahlung, die vorteilhafterweise einen geringen spezifischen Energieverbrauch aufweist und zusätzlich grobe in der Suspension anfallende phosphathaltige Rohstoffe verbessert verarbeiten kann.

Darüber hinaus verfügt die Reaktoreinheit 6 über eine am als Rohrreaktor 8 ausgebildeten Reaktor 5 der Reaktoreinheit 6 angeordnete Reaktorrezirkulationseinrichtung 11 für die Suspension. Die Reaktorrezirkulationseinrichtung 11 rezirkuliert die Suspension, indem diese erzeugte Suspension zwischen Mahleinheit 2 und Granulator 7 abzweigt und in den Säurezulauf 3 der Reaktoreinheit 6 zurückführt.

Im sechsten Ausführungsbeispiel weist die Reaktorrezirkulationseinrichtung 11 eine als statischen Mischer 14b ausgebildetes Mischelement 15b aufweisende zusätzliche zweite Mischeinheit 14b zur weiteren Vermischung der erzeugten Suspension auf. Die Reaktorrezirkulationseinrichtung 11 umfasst zudem einen Zulauf 18 für Wasser. Hierdurch besteht die Möglichkeit der Reaktoreinheit 6 Wasser zur Verdünnung, Vermischung und/oder Aufschlämmung der erzeugten Suspension zuzuführen.

Die einzelnen Komponenten der bevorzugten Vorrichtung 1, insbesondere Mahleinheit 9, Mischeinheiten 13a und 13b, Reaktoreinheit 6 und Granulator 7 sind im sechsten Ausführungsbeispiel fluidisch miteinander verbunden, wobei die fluidische Verbindung der einzelnen Vorrichtungskomponenten durch Leitungen, insbesondere Rohr- und/oder flexible Schlauchleitungen, hergestellt wird.

Zusätzlich verfügt die Reaktoreinheit 6 im sechsten Ausführungsbeispiel über eine als Doppelmantel 20 ausgebildete Temperiereinheit 21 zur Wärmezufuhr oder Wärmeabfuhr der Suspension, die in Fig. 6 zumindest angedeutet dargestellt ist. Diese weist einen Temperiereinheitzulauf 22 und einen Temperiereinheitablauf 23 für das durch den Doppelmantel 20 strömende Heizmedium auf. Dient die Temperiereinheit 21 zur Kühlung wird als Heizmedium ein Kühlmedium eingesetzt.

Zudem weist die Vorrichtung 1 im als Rohrreaktor 8 ausgebildeten Reaktor 5 der Reaktoreinheit 6 mit Reaktorrezirkulationseinrichtung 11 eine in die pH-Wert-Regeleinrichtung 16 integrierte pH-Wert-Messeinrichtung 17 auf.

Die pH-Wert-Messeinrichtung 17 misst den pH-Istwert der Suspension und übermittelt das Ergebnis an die pH-Wert-Regeleinrichtung 16, die den pH-Istwert mit einem vorgegebenen pH-Sollwert vergleicht und den pH-Wert der Suspension zeitlich vor der Granulation der Suspension auf den gewünschten pH-Wert einstellt. Der gemessene pH-Wert gibt Auskunft über die Klebrigkeit der Suspension. Je saurer die Suspension, desto klebriger ist diese. Besonders bevorzugt wird der Reaktoreinheit 6 zur Einstellung des pH-Werts eine Säure oder eine Lauge zugeführt.

Die Einstellung des pH-Werts der Suspension wirkt sich, wie zuvor erläutert, auf die Klebrigkeit der Suspension aus, die wiederum für das Verdüsen der Suspension mittels des als Wirbelschichtapparat 19 ausgebildeten Granulators 7 von größter Bedeutung ist.

Das Verfahren zur Herstellung von Düngemittelgranulat läuft in der dem dritten Ausführungsbeispiel entsprechenden Vorrichtung 1 wie folgt ab:
Zuerst wird dem als Rohrreaktor 8 ausgebildeten Reaktor 5 der Reaktoreinheit 6 über den Rohstoffzulauf 2 ein phosphathaltiger Rohstoff und über den Säurezulauf 3 eine Säure, bevorzugt eine Mineralsäure, bspw. Salz-, Schwefel-, Salpeter- oder Phosphorsäure, oder ein beliebiges Gemisch aus den vorgenannten Mineralsäuren, zugeführt.

Der phosphathaltige Rohstoff und die Säure bilden im Reaktor 5 der Reaktoreinheit 6 eine Suspension. Die Bildung der Suspension und deren Vermischung wird durch die Mischeinheit 13a gefördert. Die bei der Erzeugung der Reaktion zuzuführende oder abzuführende Wärme wird über die als Doppelmantel 20 ausgebildete Temperiereinheit 21 in den als Rohrreaktor 8 ausgebildeten Reaktor 5 ein- oder ausgebracht.

Zur Verlängerung der Verweilzeit in der Reaktoreinheit 6 wird die im Reaktor 5 erzeugte Suspension mittels einer Reaktorrezirkulationseinrichtung 11 in der Reaktoreinheit 6 rezirkuliert. Die Reaktorrezirkulationseinrichtung 11 wird im einfachsten Fall aus einer Rohrleitung und einer Fördereinrichtung ausgebildet. Durch die Rezirkulation erfolgt ein verbesserter Aufschluss des in der Reaktoreinheit 6 befindlichen phosphathaltigen Rohstoffs durch die Säure. Zudem wird durch die Änderung des Anteils des rezirkulierten Suspensionsstoffstroms das Reaktionsvolumen in der Reaktoreinheit 6 und die Verweilzeit der Suspension in der Reaktoreinheit 6 getrennt voneinander einstellbar.

Die als Rohrreaktor 8 ausgebildete Reaktoreinheit 6 verfügt über die Mahleinheit 9. Hierdurch wird der phosphathaltige Rohstoff in der erzeugten und rezirkulierten Suspension gemahlen bzw. zerkleinert und durch die vergrößerte Reaktionsoberfläche der phosphathaltigen Rohstoffpartikel wird eine beschleunigte Kinetik erreicht. Insbesondere wird jedoch die Verstopfungsgefahr bspw. in Düsen des als Wirbelschichtapparat 19 ausgebildeten Granulators 7. Der Mahlvorgang der phosphathaltigen Rohstoffe in der Reaktoreinheit 6 erfolgt als Nassmahlung, die eine hohe Mahleffektivität bei geringem Platzbedarf und geringem spezifischen Energieverbrauch aufweist und bei der die gewünschte Endfeinheit der Rohstoffpartikel des phosphathaltigen Rohstoffs frei und exakt einstellbar sind.

Die Reaktorrezirkulationseinrichtung 11 weist den weiteren Zulauf 18 zur Zuführung von Wasser auf.

Nach der Verweilzeit der Suspension in der Reaktoreinheit 6 wird im Anschluss die erzeugte Suspension über den Reaktorablauf 4 einer Granulation zugeführt. Die fertigen Düngemittelgranulate werden der Vorrichtung 1 über den Austrag 12 nach ihrer Herstellung entnommen.

Bevorzugt wird die mit dem phosphathaltigen Rohstoff reagierende Säure über den Säurezulauf 3, bevorzugt eine Mineralsäure, derart passend zu den phosphathaltigen Rohstoffen ausgewählt, sodass in der in der Reaktoreinheit 6 erzeugten Suspension die schwerlöslichen Phosphate des phosphathaltigen Rohstoffs zumindest teilweise durch die Säure gelöst und in eine neutral-ammoniumcitratlösliche Phosphatphase umgewandelt werden, sodass sich ein Düngemittelgranulat bildet dessen P₂O₅-Gehalt (P-Gehalt) größer 75 % neutral-ammoniumcitratlöslich ist, bevorzugt größer 80 %, besonders bevorzugt größer 85 %. Durch die aufgrund des Mahlvorgangs feineren phosphathaltigen Rohstoffpartikel weisen diese eine größere reaktive Oberfläche auf, sodass aus dem phosphathaltigen Rohstoff die schwerlöslichen Phosphate mittels der Säure verbessert herauslösbar sind.

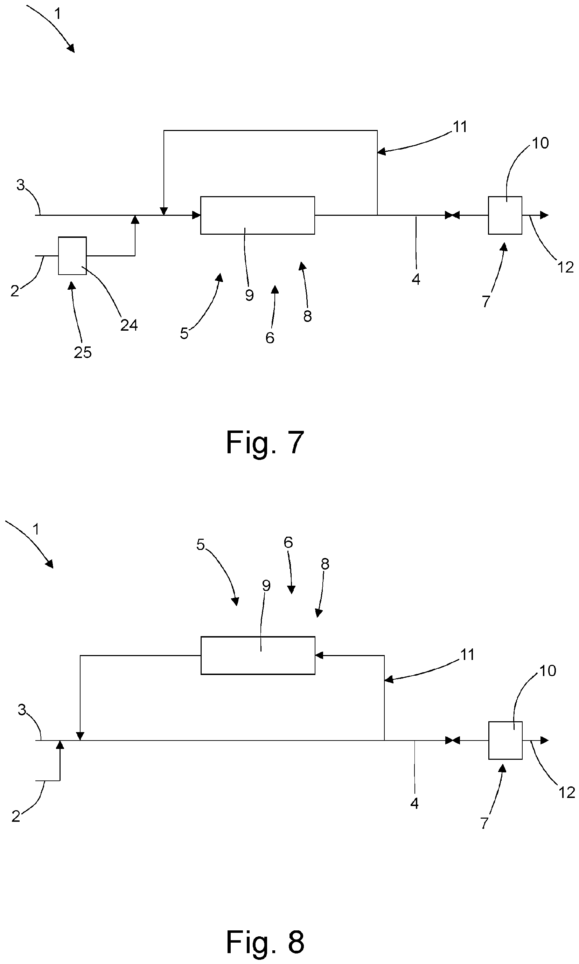

In der Fig. 7 wird ein Grundfließbild eines siebten Ausführungsbeispiels einer bevorzugten Vorrichtung 1 gezeigt.

Im Unterschied zum ersten Ausführungsbeispiel weist die Vorrichtung 1 des siebten im Rohstoffzulauf 2 eine als Sieb 24 ausgebildete Klassiereinheit 25 auf.

Hierdurch werden auf der einen Seite die groben Abfälle aus dem phosphathaltigen Rohstoff herausgefiltert und auf der anderen Seite wird eine Vorauswahl der weiterzuverarbeitenden phosphathaltigen Rohstoffpartikel erreicht, sodass das herzustellende Düngemittelgranulat eine besonders hohe Qualität aufweist, da ausschließlich Rohstoffpartikel mit einem bestimmten maximalen Durchmesser verarbeitet werden.

Ein achtes Ausführungsbeispiel einer bevorzugten Vorrichtung 1 ist in Fig. 8 dargestellt.

Im Unterschied zu der Vorrichtung 1 des ersten Ausführungsbeispiels ist die Mahleinheit 9 im achten Ausführungsbeispiel in der Reaktorrezirkulationseinrichtung 11 angeordnet.

## Patentansprüche

1. Vorrichtung (1) zur Herstellung von Düngemittelgranulat umfassend eine über einen Rohstoffzulauf (2), einen Säurezulauf (3) und einen Reaktorablauf (4) verfügende, einen Reaktor (5) aufweisende Reaktoreinheit (6) zur Erzeugung einer Suspension aus dem phosphathaltigen Rohstoff und einer Säure sowie einen Granulator (7) zur Granulation der erzeugten Suspension, **dadurch gekennzeichnet, dass** die Reaktoreinheit (6) über eine Reaktorrezirkulationseinrichtung (11) für die Suspension verfügt.

2. Vorrichtung (1) nach Anspruch 1, **dadurch gekennzeichnet, dass** die Reaktoreinheit (6) eine Mahleinheit (9) für den phosphathaltigen Rohstoff aufweist.

3. Vorrichtung (1) nach Anspruch 1 oder 2, **dadurch gekennzeichnet, dass** die Mahleinheit (9) vor, nach und/oder in der Reaktoreinheit (6) zur Erzeugung der Suspension aus einem phosphathaltigen Rohstoff und einer Säure angeordnet ist.

4. Vorrichtung (1) nach einem der vorhergehenden Ansprüche, **dadurch gekennzeichnet, dass** Mahleinheit (9), Reaktoreinheit (6) und Granulator (7) fluidisch miteinander verbunden sind.

5. Vorrichtung (1) nach einem der vorhergehenden Ansprüche, **dadurch gekennzeichnet, dass** die Reaktorrezirkulationseinrichtung (11) die Mahleinheit (9) aufweist.

6. Vorrichtung (1) nach Anspruch 5, **dadurch gekennzeichnet, dass** die Reaktorrezirkulationseinrichtung einen Rohstoffzulauf, Säurezulauf und/oder einen Zulauf für eine wässrige Lösung oder Wasser aufweist.

7. Vorrichtung (1) nach einem der vorhergehenden Ansprüche, **dadurch gekennzeichnet, dass** die Reaktoreinheit (6), bevorzugt der Reaktor (5), über einen Zerhacker verfügt.

8. Vorrichtung (1) nach einem der vorhergehenden Ansprüche, **dadurch gekennzeichnet, dass** der Reaktor (5) der Reaktoreinheit (6) als Rohrreaktor (8) ausgebildet ist.

9. Vorrichtung (1) nach einem der vorhergehenden Ansprüche, **dadurch gekennzeichnet, dass** die Reaktoreinheit (6), bevorzugt der Reaktor (5), eine Mischeinheit (13) aufweist.

10. Vorrichtung (1) nach einem der vorhergehenden Ansprüche, **dadurch gekennzeichnet, dass** die Reaktoreinheit (6) über eine Temperiereinheit (21) zur Wärmezufuhr oder Wärmeabfuhr der Suspension verfügt.

11. Vorrichtung (1) nach einem der vorhergehenden Ansprüche, **dadurch gekennzeichnet, dass** die Vorrichtung (1) über eine Klassiereinheit verfügt, bevorzugt ein Sieb oder einen Sichter.

12. Vorrichtung (1) nach Anspruch 11, **dadurch gekennzeichnet, dass** die Klassiereinheit im Rohstoffzulauf (2) angeordnet ist.

13. Vorrichtung (1) nach einem der vorhergehenden Ansprüche, **dadurch gekennzeichnet, dass** der Granulator (7) als Wirbelschicht- oder Strahlschichtapparat (19, 10) ausgebildet ist.

14. Vorrichtung (1) nach einem der vorhergehenden Ansprüche, **dadurch gekennzeichnet, dass** die Vorrichtung (1) eine pH-Wert-Regeleinrichtung (16) umfasst.

15. Vorrichtung (1) nach Anspruch 14, **dadurch gekennzeichnet, dass** die pH-Wert-Regeleinrichtung (1) in der Reaktoreinheit (6) angeordnet ist.
